Europäisches Patentamt

(19) European Patent Office

Office européen des brevets

(11) Veröffentlichungsnummer : **0 236 784 B1**

(12) **EUROPÄISCHE PATENTSCHRIFT**

(45) Veröffentlichungstag der Patentschrift :
04.09.91 Patentblatt 91/36

(51) Int. Cl.⁵ : **B01D 29/60**

(21) Anmeldenummer : 87102098.8

(22) Anmeldetag : 14.02.87

(54) **Filter zum Trennen von Feststoffen aus Flüssigkeiten.**

(30) Priorität : 11.03.86 CH 990/86

(43) Veröffentlichungstag der Anmeldung :
16.09.87 Patentblatt 87/38

(45) Bekanntmachung des Hinweises auf die
Patenterteilung :
04.09.91 Patentblatt 91/36

(84) Benannte Vertragsstaaten :
BE DE FR GB IT NL

(56) Entgegenhaltungen :
CH-A- 647 685
GB-A- 2 084 890
US-A- 4 081 381

(73) Patentinhaber : Zschokke Wartmann AG
CH-5312 Döttingen (CH)

(72) Erfinder : Glorer, Johann
Aarestrasse 4
CH-5102 Rupperswil (CH)

(74) Vertreter : EGLI-EUROPEAN PATENT
ATTORNEYS
Horneggstrasse 4
CH-8008 Zürich (CH)

EP 0 236 784 B1

**Beschreibung**

Die Erfindung betrifft einen Filter zum Trennen von Feststoffen aus Flüssigkeiten und zur Behandlung des sich mit den Feststoffen auf der Filterfläche bildenden Filterkuchens, in dessen Gehäuse ein Rührwerk eingebaut ist, welches mit einem Motor für die Drehbewegung und mit mindestens einem Linearmotor in Form eines hydraulischen Zylinders ausgerüstet ist, bei welch letzterem der Kolben für die Aufwärts- und Abwärtsbewegung durch das Druckmedium einer Druckquelle beaufschlagbar ist.

Es ist bekannt, bei Filtern zum Trennen von Feststoffen aus Flüssigkeiten, insbesondere bei Filternutschen, über dem Filterboden ein Rührwerk vorzusehen, welches für verschiedene Zwecke einsetzbar ist. Das Rührwerk besteht im wesentlichen aus einer rotierbaren sowie heb- und senkbaren Antriebswelle, an deren Ende zwei oder mehr Rührwerkarme befestigt sind. Je nach der Drehrichtung und/oder der Hebe- oder Senkbewegung können zusätzliche Operationen ausgeführt werden.

Eine wesentliche Operation, die das Rührwerk ausführen soll, besteht in dem Glattstreichen des sich auf dem Filterboden bildenden Filterkuchens. Es ist nicht zu vermeiden, dass während der Filteroperation der Filterkuchen sich nicht gleichmässig aufbaut, sondern Risse bilden kann. Hier hat das Rührwerk die Aufgabe, den Filterkuchen glattzustreichen, so dass sich die Risse im Filterkuchen schliessen. Dadurch wird eine gleichmässige Durchlässigkeit des Filterkuchens gewährleistet.

Für das Glattstreichen des Filterkuchens ist es erforderlich, einen bestimmten Druck auf denselben auszuüben. Weiter soll dieser Druck in gleicher Stärke und unabhängig vom Wachsen oder Schrumpfen des Filterkuchens ausgeübt werden.

In dem praktischen Betrieb ist es schwierig, die erwähnten Forderungen zu verwirklichen. Man behilft sich deshalb dadurch, dass die Bedienungsperson für die Filternutsche das Glattstreichen des Filterkuchens derart nachregelt, dass entsprechend dem Wachsen oder Schrumpfen des Filterkuchens der Druck des Rührwerkes annähernd konstant bleibt. Diese manuelle Einstellung des Rührwerkes ist jedoch zeitraubend, so dass die Bedienungsperson von andern Aufgaben entlastet werden muss, da sie die Filtrationsoperation dauernd beobachten muss. Dies kann zudem durch eine schlechte Beobachtbarkeit, z.B. durch ein angelaufenes oder verschmutztes Schauglas, zusätzlich erschwert werden.

Hier setzt die Erfindung ein, der die Aufgabe zugrundeliegt, einen Filter der eingangs beschriebenen Art so weiter auszugestalten, dass die Funktion des Rührwerkes bei einer Filteroperation über längere Zeit unbeobachtet gelassen werden kann und damit der Filter in einen automatisch gesteuerten Prozessablauf integriert werden kann.

Diese Aufgabe wird gemäss der Erfindung dadurch gelöst, dass für die Abwärtsbewegung des Rührwerkes die eine Kolbenseite des Linearmotors über eine erste Leitung durch einen von einem Druckregelventil geregelten konstanten Druck des Druckmediums beaufschlagt ist, während für die Einstellung des Druckes auf der andern Kolbenseite des Linearmotors diese Seite mit einer ein Druckhalteventil aufweisenden zweiten Leitung verbunden ist.

Die Erfindung ist in der Zeichnung in einem Ausführungsbeispiel dargestellt und nachfolgend beschrieben. Es zeigen:

Fig. 1 einen Querschnitt eines schematisch dargestellten Nutschenfilters,

Fig. 2 ein Schaltschema der Steuerung des Linearmotors für die Hebe- und Senkbewegung des Rührwerkes eines Nutschenfilters nach Fig. 1 und

Fig. 3 das Schaltschema der Druckquelle und der dazugehörigen Schaltelemente für die Steuerung nach Fig. 2.

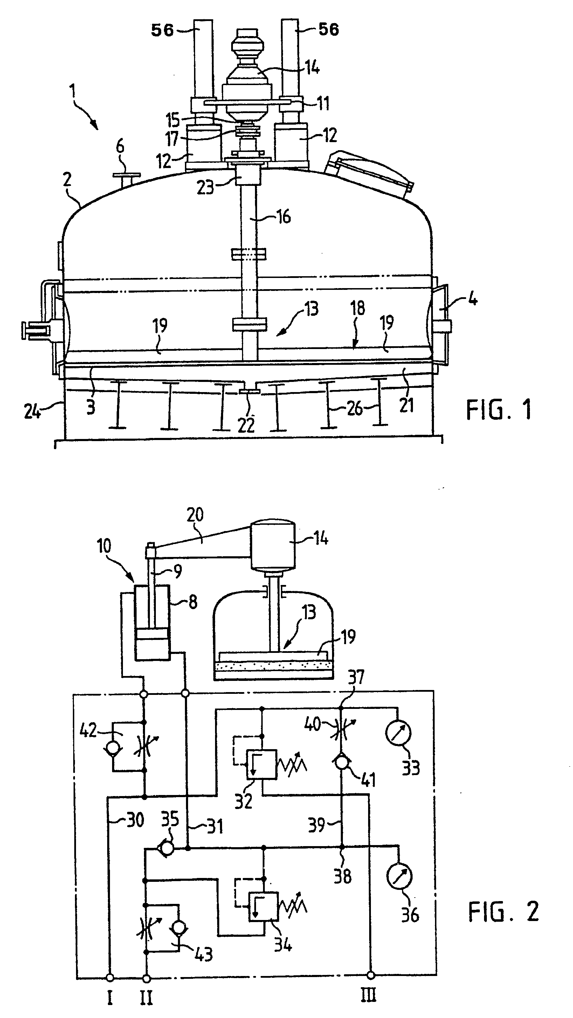

Die Erfindung wird nachstehend am Beispiel eines Nutschenfilters für Druckbetrieb bekannter Bauart beschrieben, wie es in Fig. 1 schematisch dargestellt ist. Die Erfindung ist jedoch in ihrer Anwendung nicht nur auf Druckfilter beschränkt, sondern kann auch bei offenen Filtern und solchen mit Vakuumbetrieb eingesetzt werden.

Das in Fig. 1 gesamthaft mit 1 bezeichnete Nutschenfilter weist ein Gehäuse 2 auf, das im allgemeinen zylinderförmig ausgebildet und durch einen waagrecht angeordneten Boden 3 abgeschlossen ist; dieser kann entweder mit dem Gehäuse 2 lösbar oder nichtlösbar verbunden sein. In der Gehäusewand ist ein Verschluss 4 vorgesehen, durch welchen der sich im Innern des Gehäuses 2 bildende Filterkuchen entfernt werden kann. Durch einen auf der Deckelpartie des Gehäuses 2 angebrachten Leitungsanschluss 6 kann beispielsweise die zu filtrierende Trübe oder Suspension in das Gehäuseinnere eingebracht werden. Weiter kann (nicht dargestellt) ein Anschluss für die Einführung eines Druckmediums, z.B. Stickstoff o.dgl., vorgesehen sein.

Auf dem Boden 3 des Gehäuses 2 ist eine Filterfläche angeordnet, die mit einem Filtermittel, beispielsweise einem Filtertuch, einem Sieb oder einer festen, porösen Platte, belegt ist.

Auf der Deckelpartie des Gehäuses 2 ist eine Hubvorrichtung aufgebaut, welche sich aus zwei Linearmotoren 10, z.B. Hydraulik-Zylinder, zusammensetzt. Die Linearmotoren 10 sind mittels einer Verbindungsplattform 11 miteinander verbunden und sind auf Sockeln 12 befestigt, welche auf der Deckelpartie des Gehäuses 2 abgestützt sind. Zudem ist die Verbindungsplattform 11 von Führungssäulen 56 geführt.

Auf der Verbindungsplattform 11 ist ein Motor 14, beispielsweise ein elektrischer Getriebemotor fest gelagert, an dessen Antriebswelle 15 eine Rührerwelle 16 eines Rührwerkes 13 mit einer Kupplung 17 gekuppelt ist. Am untern Ende der Rührerwelle 16 ist ein Rührer 18 befestigt, der beispielsweise zwei Rührarme 19 aufweist.

Anstelle der beiden Linearmotoren 10 kann auch nur ein einziger Linearmotor 10 in Form eines Hydraulik-Zylinders 8 verwendet werden, siehe Fig. 2. Bei dieser Anordnung ist der Motor 14 für die Erzeugung der Drehbewegung des Rührerwerkes 13 mittels eines auskragenden Tragarmes 20 mit der Kolbenstange des Linearmotors 10 verbunden.

Unter dem Boden 3 ist ein als Hohlraum ausgebildeter Filterablauf 21 vorgesehen, aus welchem das Filtrat durch einen im Zentrum angeordneten Ablaufstutzen 22 abgeleitet werden kann. Der Boden 3 ist am Aussenumfang durch eine ringförmige Wand 24 begrenzt und ist durch Stege 26 aus einem Doppel-T-Profil abgestützt.

Das Rührwerk 13 hat je nach dem zu verarbeitenden Produkt unterschiedliche Funktionen auszuüben, von denen der Behandlung des Filterkuchens besondere Bedeutung zukommt. Der sich auf dem Filtermittel bildende Filterkuchen schrumpft zusammen, wenn ihm das Filtrat entzogen wird. Dadurch entstehen Risse im ganzen Filterkuchen, welche sich bis zum Filtermittel erstrecken können. Im Druckbetrieb eines Nutschenfilters kann das zur Druckbeaufschlagung eingeleitete Gas durch diese Risse entweichen, ohne die gewünschte Wirkung ausgeübt zu haben. Zudem bewirken die Risse, dass der Filter kuchen beim Waschen und Trocknen nicht gleichmässig von der Waschflüssigkeit bzw. von der Druckluft durchströmt wird. Eine der Funktionen des Rührwerkes 13 besteht im Glattstreichen des Filterkuchens, damit sich die Risse schliessen und dadurch eine gleichmässige Durchlässigkeit des Filterkuchens erreicht wird. Durch den vom Rührwerk 13 ausgeübten Druck wird der Filterkuchen zusätzlich ausgepresst. Zum Glattstreichen der Oberfläche des Filterkuchens sind die Rührarme 19 zweckmässig kufenartig ausgebildet.

Damit dieses Glattstreichen des Filterkuchens mit konstantem Druck selbsttätig durchgeführt werden kann, ist die in Fig. 2 beschriebene hydraulische Steuerung vorgesehen, mit welcher der als Hydraulikzylinder 8 ausgebildete Linearmotor 10 beaufschlagt wird, dessen Kolbenstange 9 die das Rührwerk 13 tragende Plattform 11 bzw. den Tragarm 20 stützt.

Der Hydraulikzylinder 8 ist auf seiner kolbenstangenseitigen Kolbenseite mit einer ersten Leitung 30 und auf der andern, kolbenstangenfreien Seite mit einer zweiten Leitung 31 verbunden. An die Leitung 30 ist ein Druckregelventil 32 angeschlossen, mit dem ein konstanter Druck in der Leitung 30 einstellbar und mit einem Druckmesser 33 messbar ist. In der Leitung 31 ist ein Druckhalteventil 34 angeschlossen, das den Druck vor diesem Ventil unabhängig von der durchfliessenden Menge konstant hält. In der Leitung 31 ist parallel zum Druckhalteventil 34 ein Rückschlagventil 35 angeordnet, das beim Anheben des Rührwerkes 13 sich öffnet, im Glattsteichbetrieb jedoch geschlossen ist.

Mit den beiden Ventilen 32, 34 kann ein konstanter Druck mit dem Rührwerk 13 dadurch ausgeübt werden, dass auf den beiden Kolbenseiten bzw. in den Leitungen 30, 31 ein konstanter Druck eingestellt wird, so dass ein konstantes Druckgefälle zwischen den Leitungen 30, 31 besteht. Die beim Glattstreichen des Filterkuchens von den Rührarmen 19 ausgeübte Presskraft setzt sich aus dem Rührwerkgewicht und dem durch den Druck in der Leitung 30 auf die kolbenstangenseitige Kolbenfläche ausgeübte Kraft sowie den entgegengesetzt wirkenden Kräften zusammen, welch letztere sich ihrerseits aus der Reibung einer die Rührwelle 16 abdichtenden Stopfbüchse 23, dem auf die Rührerwelle 16 wirkenden Behälterdruck und dem auf die kolbenfreie Kolbenfläche des Zylinders 8 wirkenden Druck der Leitung 31 zusammen. Solange die Stärke des Filterkuchens nur wenig wächst, bleibt auch die vom Rührwerk 13 beim Glattstreichen der Filterkuchenoberfläche auf den Filterkuchen ausgeübte Presskraft annähernd konstant. Wenn jedoch der Filterkuchen stärker wächst, verändert sich dieser Pressdruck und muss dann durch Beaufschlagen der Leitung 31 mit Druckmedium korrigiert werden. Dieses Nachstellen des Pressdruckes kann in einfacher Weise dadurch vermieden werden, wenn in den Leitungen 30, 31 Abzweigungen 37, 38 vorgesehen werden, die durch eine mit einem Drosselventil 40 und einem Rückschlagventil 41 versehene Leitung 39 miteinander verbunden werden. Da beim Glattstreichen des Filterkuchens mit dem Rührwerk 13 in der Leitung 30 ein höherer Druck herrscht als in der Leitung 31 fliesst Druckmedium aus der Leitung 30 in die Leitung 31. Wird nun durch das Wachsen der Stärke des Filterkuchens ein Rückdruck auf das Rührwerk ausgeübt, wird der Kolben 8 etwas entlastet, wodurch Druckmedium durch die Leitung 39 so lange nachfliesst, bis das eingestellte Druckgefälle sich wieder bei einer höheren Lage der Rührarme 19 einstellt. Auf diese Weise wird erreicht, dass unabhängig von der Art und der Ausbildung des Filterkuchens der eingestellte Druck des Rührwerkes 13 beim Glattstreichen während einer ganzen Filteroperation konstant bleibt.

In der Steuerung nach Fig. 2 ist für die Leitung 31 ein Druckmesser 36 vorgesehen, während in den Leitungen 30, 31 je ein Drosselrückschlagventil 42, 43 vorgesehen, bei denen das Rückschlagventil bei Druckmediumfluss gegen den Zylinder 8 öffnet. Schwingungen die hauptsächlich bei kleiner Sinkgeschwindigkeit im Hydraulik-System auftreten können, kann man dadurch entgegenwirken, dass der Druck in der Leitung 31 mit Hilfe des Druckregelventils 32 auf den tiefstmöglichen Wert verringert wird.

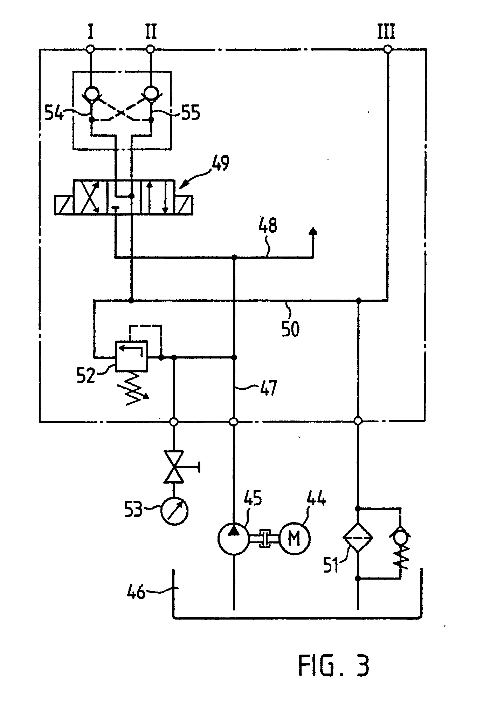

Das gesamte Hydraulik-System ergibt sich aus Fig. 2 und 3. Die Verbindungsstellen sind durch die römischen Zahlen I, II und III bezeichnet. Hierbei stellen I, II den Anschluss der Leitungen 30, 31 an das Drucknetz nach Fig. 3 dar. Das Drucknetz wird von einer, durch einen Motor 44 angetriebenen Hydropumpe 45 gespeist, welche das Druckmedium aus einem Behälter 46 ansaugt und in eine Druckleitung 47 fördert, bei der eine Abzweigung 48 für die Beaufschlagung anderer Hydroaggregate dienen kann. An der Druckleitung 47 ist ein 4/3-Wegeventil 49 angeschlossen, bei dem an zwei weitere Anschlüsse die Leitungen 30, 31 angeschlossen sind, während am vierten Anschluss eine drucklose Rücklaufleitung 50 anschliesst, welche über ein druckgesichertes Filter 51 in den Behälter 46 mündet. In die Leitung 50 münden auch Rückleitungen des Druckregelventils 32 (bei III) und eines Druckregelventils 52, mit welchem der Druck in der Druckleitung 47 geregelt und an einem Druckmesser 53 angezeigt wird. Im weitern ist in den Leitungen 30, 31 zwischen den Drosselrückschlagventilen 42, 43 und dem Wegeventil 49 je ein druckgesteuertes Rückschlagventil 54, 55 angeordnet. Das Ventil 54 wird hierbei durch den Druck in der Zuleitung der Leitung 31 und das Ventil 55 durch den Druck in der Zuleitung der Leitung 30 geöffnet.

Die beschriebene Steuerung nach Fig. 2 und 3 arbeitet wie folgt:

## Stillstand des Nutschenfilters

Der Stillstand der Anlage entspricht der Darstellung in Fig. 2 und 3. Das Wegeventil 49 befindet sich in der mittleren Stellung, in welcher die Leitungen 30, 31 mit dem Ablauf, d.h. mit der Rückleitung 50, verbunden sind. Dadurch werden auch die Steuerleitungen der Rückschlagventile 54, 55 auf Ablauf gestellt, so dass diese Ventile geschlossen sind. Dies bedeutet, dass kein Druckmedium ablaufen kann und somit das Rührwerk 13 in der eingestellten Lage verbleibt.

## Anheben des Rührwerkes 13

Hierzu wird das Wegeventil 49 in die rechte Lage verschoben. Das Drucknetz, d.h. die Leitung 47 ist mit der Leitung 31 verbunden, während die Leitung 30 auf Ablauf gestellt ist. Dadurch wird dass Rührwerk 13 durch den Linearmotor 10 in seine obere Lage angehoben.

## Glattstreichen des Rührwerkes

Hierzu wird das Wegeventil 49 nach links bewegt. Der im Druckregelventil 32 eingestellte Druck baut sich in der Leitung 30 auf, während sich in der Leitung 31 der durch das Druckhalteventil 34 eingestellte Druck einstellt. Sind die am Rührwerk 13 wirkenden Kräfte im Gleichgewicht, bleibt es stehen. Nun kann entweder der Druck in der Leitung 30 erhöht oder der Druck in der Leitung 31 gesenkt werden, damit das Rührwerk 13 sich abwärts bewegt. Fahren die Rührarme 19 auf dem Filterkuchen auf, wird die Abwärtsbewegung des Rührwerkes 13 gebremst und dadurch eine gewisse Kraft auf den Filterkuchen ausgeübt, wodurch die drehenden Rührwerkarme die Kuchenoberfläche glatt streichen. Schrumpft der Filterkuchen wegen Entzug von Filtrat, fährt das sich drehende Rührwerk dem Kuchenniveau nach und drückt immer mit demselben Glattstreichdruck auf die Kuchenoberfläche. Steigt durch Anwachsen des Filterkuchens der Rückdruck auf die Rührarme 19, wird das wirksame Gewicht des Rührwerkes verringert, so dass durch den Druck in der Leitung 31 und durch das durch die Verbindungsleitung 39 strömende Druckmedium das Rührwerk so lange angehoben wird, bis wieder das Gleichgewicht der Kräfte erreicht ist, usf.

Mit der beschriebenen Glattstreichautomatik für das Rührwerk 13 kann der Einsatzbereich von Nutschenfiltern erweitert werden, da der Bedienungsaufwand für das Nutschenfilter wesentlich verringert wird. Die Mittel zur Erreichung dieser Automatik sind recht einfach und zudem kann sie Trüben und Suspensionen mit unterschiedlichen Feststoffen und Feststoffmengen leicht angepasst werden.

In den Figuren 2 und 3 sind Gruppen von Hydraulikelementen durch ein strichpunktiert gezogenes Rechteck umgeben. Der Hydraulikzylinder 8 ist, siehe Fig. 1 auf dem Gehäuse 2 aufgebaut, während die Baugruppen nach Fig. 2 und 3 beispielsweise auf dem Pumpenaggregat, das gewöhnlich mit dem Behälter, dem Antriebsmotor und weiteren Komponenten eine Einheit bildet, aufgebaut sein kann. In den Figuren 2 und 3 sind die Ventile und Drosseln durch einen Pfeil als regelbar gekennzeichnet. Es hängt aber von den praktischen Einsatzbedingungen des Nutschenfilters ab, ob Ventile fest eingestellt werden oder einstellbar bleiben.

## Patentansprüche

1. Filter zum Trennen von Feststoffen aus Flüssigkeiten und zur Behandlung des sich mit den Feststoffen auf der Filterfläche bildenden Filterkuchens, in dessen Gehäuse (2) ein Rührwerk (13) eingebaut ist, welches mit einem Motor (14) für die Drehbewegung und mit mindestens einem Linearmotor (10) in Form eines hydraulischen Hubzylinders (8) ausgerüstet ist, bei welch letzterem der Kolben für die Aufwärts- und Abwärtsbewegung durch das Druckmedium einer Druckquelle (45) beaufschlagbar ist, dadurch gekennzeichnet, dass für die Hubbewegung des Rührwerkes (13) die eine Kolbenseite des Linearmotors (10) über eine erste Leitung (30) durch einen von einem Druckregelventil (32) geregelten konstanten Druck des Druckmediums beaufschlagt ist, während für die Einstellung des Druckes auf der andern Kolbenseite des Linearmotors diese Seite mit einer, ein Druckhalteventil (34) aufweisenden zweiten Leitung (31) verbunden ist.

2. Filter nach Anspruch 1, dadurch gekennzeichnet, dass in der ersten Leitung (30) zwischen der einen Kolbenseite und dem Druckregelventil (32) sowie in der zweiten Leitung (31) zwischen der andern Kolbenseite und dem Druckhalteventil (34) je eine Abzweigung (37, 38) vorgesehen ist, wobei diese Abzweigungen durch eine, mit einer einstellbaren Drosseleinrichtung (40) versehenen Verbindungsleitung (39) miteinander verbunden sind.

3. Filter nach Anspruch 2, dadurch gekennzeichnet, dass in der Verbindungsleitung (39) ein Rückschlagventil (41) in Serie mit der Drosseleinrichtung (40) angeordnet ist, welches den Durchgang von Druckmedium von der zweiten Leitung (31) in die erste Leitung (30) sperrt.

4. Filter nach Anspruch 2, oder 3, dadurch gekennzeichnet, dass in der ersten und zweiten Leitung (30, 31) je ein Drosselrückschlagventil (42, 43) angeordnet ist, wobei bei gegen den Linearmotor (10) gerichteter Strömung des Druckmediums das Rückschlagventil geöffnet ist.

5. Filter nach einem der Ansprüche 2 bis 4, dadurch gekennzeichnet, dass in der ersten bzw. zweiten Leitung (30, 31) je ein vom Druck der zweiten bzw. ersten Leitung gesteuertes Rückschlagventil (54, 55) eingebaut ist, welches das Entleeren der ersten und zweiten Leitung bei Fehlen des Zuflusses von Druckmedium verhindert.

6. Filter nach einem der Ansprüche 2 bis 5, dadurch gekennzeichnet, dass zu dem Druckhalteventil (34) ein Rückschlagventil (35) parallel geschaltet ist, das sich bei gegen den Linearmotor (10) gerichteter Strömung des Druckmediums öffnet.

7. Filter nach einem der Ansprüche 1 bis 6, dadurch gekennzeichnet, dass der Linearmotor (10) ein Hydraulik-Zylinder (8) mit Differentialkolben ist.

## Claims

1. A filter for separating solid matter from liquids and for treating the filter cake formed by the solid matter on the filter surface, in the housing (2) of which there is incorporated a stirring apparatus (13), which is equipped with a motor (14) for the rotary motion and with at least one linear motor (10) in the form of a hydraulic lifting cylinder (8), in the latter the pressure agent from a pressure source (45) acts upon the piston for upward and downward motion, characterised in that for the lifting motion of the stirring apparatus (13) one side of the piston of the linear motor (10) is acted upon by way of a first line (30) by a constant pressure of the pressure agent regulated by a pressure regulating valve (32), whilst for the adjustment of the pressure on the other side of the piston of the linear motor, the side is connected to a second line (31) having a pressure-holding valve (34).

2. A filter according to claim 1, characterised in that in the first line (30) between the one side of the piston and the pressure regulating valve (32) as well as in the second line (31) between the other side of the piston and the pressure-holding valve (34) there is provided in each case a branch (37, 38), wherein these branches are connected to each other by a connecting line (39), provided with an adjustable throttle unit (40).

3. A filter according to claim 2, characterised in that in the connecting line (39) there is arranged a non-return valve (41), in series with the throttle unit (40), which blocks the passage of the pressure agent from the second line (31) into the first line (30)

4. A filter according to claim 2 or 3, characterised in that in the first and second lines (30,31) there is arranged in each case a throttle return valve (42, 43), wherein when the flow of the pressure agent is directed against the linear motor (10) the non-return valve is opened.

5. A filter according to one of claims 2 to 4, characterised in that in the first or second line (30, 31) there is incorporated in each case a non-return valve (54, 55), controlled by the pressure of the second or first line, which prevents the emptying of the first and second line with failure of the supply of pressure agent.

6. A filter according to one of claims 2 to 5, characterised in that a non-return valve (35) is connected in parallel with the pressure-holding valve (34), which opens when the flow of the pressure agent is directed against the linear motor (10).

7. A filter according to one of claims 1 to 6, characterised in that the linear motor (10) is a hydraulic cylinder (8) with differential pistons.

## Revendications

1. Filtre pour la séparation de matières solides en suspension dans des liquides et pour le traitement du gâteau de filtrage qui se forme avec les particules solides sur la surface filtrante, dans le carter (2) duquel est monté un agitateur (13) muni d'un moteur (14) pour le mouvement de rotation et d'au moins un moteur linéaire (10) sous la forme d'un vérin de levage hydraulique (8), dont le piston peut être alimenté par le fluide sous pression d'une source de pression (45) en vue de sa course ascendante et descendante, caractérisé en ce que, pour le mouvement de montée de l'agitateur (13), un côté du piston du moteur linéaire (10) est alimenté par une première conduite (30) par une pression constante du fluide sous pression réglée par un régulateur de pression (32), tandis que pour le réglage de la pression de l'autre côté du piston du moteur linéaire, ce côté est relié à une seconde conduite (31) munie d'une vanne de maintien de pression (34).

2. Filtre suivant la revendication 1, caractérisé en ce que, dans la première conduite (30) entre un côté du piston et le régulateur de pression (32) ainsi que dans la seconde conduite (31) entre l'autre côté du piston et la vanne de maintien de la pression (34), sont prévus des branchements respectifs (37, 38), ceux-ci étant reliés l'un à l'autre par une conduite de liaison (39) comportant un dispositif d'étranglement réglable (40).

3. Filtre suivant la revendication 2, caractérisé en ce que dans la conduite de liaison (39) est prévu un clapet de retenue (41) monté en série avec le dispositif d'étranglement (40) bloquant le passage du fluide sous pression de la seconde conduite (31) dans la première conduite (30).

4. Filtre suivant la revendication 2 ou 3, caractérisé en ce que dans la première et dans la seconde conduite (30, 31) sont disposés des clapets de retenue à étranglement (42, 43) respectifs, et lorsque le fluide sous pression s'écoule à l'encontre du moteur linéaire (10), le clapet de retenue est ouvert.

5. Filtre suivant l'une des revendications 2 à 4, caractérisé en ce que dans la première et dans la seconde conduite (30, 31) sont montés des clapets de retenue (54, 55), respectifs, commandés par la pression de la seconde et de la première conduite destiné à empêcher que la première et la seconde conduite se vident lorsque l'arrivée de fluide sous pression fait défaut.

6. Filtre suivant l'une des revendications 2 à 5, caractérisé en ce qu'un clapet de retenue (35) est monté en parallèle à la vanne de maintien de la pression (34) qui s'ouvre lorsque le fluide sous pression s'écoule à l'encontre du moteur linéaire (10).

7. Filtre suivant l'une des revendications 1 à 6, caractérisé en ce que le moteur linéaire (10) est un vérin hydraulique (8) comportant un piston différentiel.

FIG. 1

FIG. 2

FIG. 3